# EUROPEAN PATENT APPLICATION

(11) **EP 4 727 094 A1**
(43) Date of publication of application: **15.04.2026**
(21) Application number: 24825182.9
(22) Date of filing: 13.06.2024
(51) Int. Cl.: H04L 69/06

(54) **TRANSMISSION METHOD AND APPARATUS, AND DEVICE AND COMPUTER STORAGE MEDIUM**

(30) Priority: 19.06.2023 CN 202310731630
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: ZHANG, Dechao, Beijing 100053 (CN); LI, Han, Beijing 100053 (CN); LIU, Sheng, Beijing 100053 (CN); LI, Yunbo, Beijing 100053 (CN); WANG, Dong, Beijing 100053 (CN); HAN, Liuyan, Beijing 100053 (CN)
(74) Representative: J A Kemp LLP
(86) International application number: PCT/CN2024/098952
(87) International publication number: WO 2024/260286

(57) **Abstract**

Disclosed in the embodiments of the present disclosure are a transmission method and apparatus, and a device and a computer storage medium. The method comprises: mapping a first service into a first frame, wherein the first frame at least comprises a first overhead area; and multiplexing and/or mapping the first frame to a second frame, and sending the second frame.

## Description

### CROSS-REFERENCE TO RELATED APPLICATION

The present disclosure claims priority to the Chinese Patent Application No. 202310731630.5 filed on June 19, 2023, the entire content of which is incorporated herein by reference in its entirety.

### TECHNICAL FIELD

The present disclosure relates to the field of communication technologies, and in particular, to a transmission method, apparatus, device, and computer storage medium.

### BACKGROUND

Traditional Optical Transport Network (OTN) networks have introduced Fine Granularity OTN/Fine grain OTN (fgOTN) and Optical Service Unit (OSU) mechanisms to carry small granular services at the level of 10 Mbit/s to 1 Gbit/s (bps).

In the related art, an OTN frame has a structure of 4 rows and 3824 columns, where the first 16 columns are overhead, and columns 17 to 3824 are payload area. When a low-order Optical Data Unit (ODU) is multiplexed and mapped to a high-order ODU, the Generic Mapping Procedure (GMP) mapping is generally adopted. The traditional OTN frame is too long and the frame overhead occurs at a low frequency. When carrying a 10 M service, the frame period is 12.3 ms, resulting in a long alarm detection time for operators.

### SUMMARY

To solve the existing technical problems, embodiments of the present disclosure provide a transmission method, apparatus, device, and computer storage medium.

To achieve the above objective, the technical solution of the embodiments of the present disclosure is implemented as follows:
In a first aspect, an embodiment of the present disclosure provides a transmission method applied to a first device; and the method includes:
mapping a first service into a first frame, wherein the first frame includes at least a first overhead area; and
multiplexing and/or mapping the first frame into a second frame, and sending the second frame.

In the above solution, the first overhead area is located in columns 1905 to 1920 of the first frame.

In the above solution, the first frame further includes a payload area, and the payload area is located in columns 17 to 1904 and columns 1921 to 3824 of the first frame; the method further includes: checking data carried by the payload area of an i-th first frame in a first manner to obtain first check information of the i-th first frame; and filling or placing the first check information of the i-th first frame into a second overhead area of an (i+2)-th first frame, where i is a positive integer.

In the above solution, the first manner is bit-interleaved parity check; and the first check information is check information of the bit-interleaved parity check.

In a second aspect, an embodiment of the present disclosure provides a transmission method applied to a first device; and the method includes:
mapping a first service into a first frame, wherein the first frame includes first indication information, and the first indication information is used to indicate a starting position of a first complete code block in a payload area of the first frame among a code block stream carried by the first frame;
multiplexing and/or mapping the first frame into a second frame, and sending the second frame.

In the above solution, the mapping a first service into a first frame includes: encoding a third frame to obtain a code block stream, wherein the third frame is used to carry the first service; and mapping the code block stream into the first frame.

In the above solution, the first frame includes a first overhead area.

In the above solution, the first overhead area is located in columns 1905 to 1920 of the first frame, and the payload area of the first frame is located in columns 17 to 1904 and columns 1921 to 3824 of the first frame.

In the above solution, the encoding a third frame to obtain a code block stream includes: checking the third frame in a second manner to obtain second check information; encoding the third frame and the second check information to obtain the code block stream, or encoding the third frame and obtaining the code block stream based on the second check information and the encoded third frame.

In the above solution, the encoding the third frame and the second check information to obtain the code block stream includes: filling or placing the first four bytes of the third frame into a start code block of the code block stream, and/or filling or placing the second check information into a last data code block or an end code block of the code block stream.

In the above solution, the encoding the third frame and the second check information to obtain the code block stream includes: filling or placing the third frame into data code blocks of the code block stream, and/or filling or placing the second check information into a first idle code block after an end code block of the code block stream.

In the above solution, the code block stream is a 64B/66B encoded block stream.

In the above solution, the second manner is cyclic redundancy check; the second check information is check information of the cyclic redundancy check.

In a third aspect, an embodiment of the present disclosure provides a transmission method applied to a second device; the method includes:
receiving a second frame sent by a first device, and performing demultiplexing and/or demapping on the second frame to obtain a first frame, wherein the first frame includes at least a first overhead area; and
performing demapping on the first frame to obtain a first service.

In the above solution, the first overhead area is located in columns 1905 to 1920 of the first frame.

In the above solution, the first frame further includes a payload area, and the payload area is located in columns 17 to 1904 and columns 1921 to 3824 of the first frame; and the method further includes: obtaining first check information of an i-th first frame from a second overhead area of an (i+2)-th first frame, wherein the first check information is obtained by the first device checking data carried by the payload area of the i-th first frame in a first manner; and i is a positive integer.

In the above solution, the first manner is bit-interleaved parity check; and the first check information is check information of the bit-interleaved parity check.

In a fourth aspect, an embodiment of the present disclosure provides a transmission method applied to a second device; the method includes:
receiving a second frame sent by a first device, and performing demultiplexing and/or demapping on the second frame to obtain a first frame, wherein the first frame includes first indication information, and the first indication information is used to indicate a starting position of a first complete code block in a payload area of the first frame among a code block stream carried by the first frame;
performing demapping on the first frame based on the first indication information to obtain a first service.

In the above solution, the performing demapping on the first frame based on the first indication information to obtain a first service includes: obtaining a code block stream based on the first indication information, decoding the code block stream to obtain a third frame, and obtaining the first service from the third frame.

In the above solution, the first frame includes a first overhead area.

In the above solution, the first overhead area is located in columns 1905 to 1920 of the first frame, and the payload area of the first frame is located in columns 17 to 1904 and columns 1921 to 3824 of the first frame.

In the above solution, the decoding the code block stream to obtain a third frame includes: obtaining the third frame from a start code block and data code blocks of the code block stream, and/or obtaining second check information from a last data code block or an end code block of the code block stream, where the second check information is check information obtained by the first device checking the third frame in a second manner.

In the above solution, the decoding the code block stream to obtain a third frame includes: obtaining the third frame from data code blocks of the code block stream, and/or obtaining second check information from a first idle code block after an end code block of the code block stream, wherein the second check information is check information obtained by the first device checking the third frame in a second manner.

In the above solution, the code block stream is a 64B/66B encoded block stream.

In the above solution, the second manner is cyclic redundancy check; and the second check information is check information of the cyclic redundancy check.

In a fifth aspect, an embodiment of the present disclosure provides a transmission method applied to a second device; the method includes:
receiving a second frame sent by a first device, and performing demultiplexing and/or demapping on the second frame to obtain a first frame;
decoding a code block stream carried by the first frame to obtain a third frame, and checking the third frame in a second manner to obtain third check information;
comparing the third check information with second check information, and replacing one or more data code blocks or an end code block of the code block stream with error code blocks if the third check information is different from the second check information, wherein the second check information is check information obtained by the first device checking the third frame in the second manner.

In the above solution, the first frame includes first indication information, and the first indication information is used to indicate a starting position of a first complete code block in a payload area of the first frame among the code block stream carried by the first frame.

In the above solution, the first frame includes a first overhead area.

In the above solution, the first overhead area is located in columns 1905 to 1920 of the first frame, and the payload area of the first frame is located in columns 17 to 1904 and columns 1921 to 3824 of the first frame.

In the above solution, the decoding a code block stream carried by the first frame to obtain a third frame includes: obtaining the third frame from a start code block and data code blocks of the code block stream, and/or obtaining second check information from a last data code block or an end code block of the code block stream.

In the above solution, the decoding a code block stream carried by the first frame to obtain a third frame includes: obtaining the third frame from data code blocks of the code block stream, and/or obtaining second check information from a first idle code block after an end code block of the code block stream.

In the above solution, the code block stream is a 64B/66B encoded block stream.

In the above solution, the second manner is cyclic redundancy check; and both the second check information and the third check information are check information of the cyclic redundancy check.

In a sixth aspect, an embodiment of the present disclosure provides a transmission apparatus applied to a first device; the apparatus includes a first processing unit and a first communication unit; wherein
the first processing unit is configured to map a first service into a first frame, wherein the first frame includes at least a first overhead area; and to multiplex and/or map the first frame into a second frame; and
the first communication unit is configured to send the second frame.

In the above solution, the first overhead area is located in columns 1905 to 1920 of the first frame.

In the above solution, the first frame further includes a payload area, and the payload area is located in columns 17 to 1904 and columns 1921 to 3824 of the first frame; and the first processing unit is further configured to check data carried by the payload area of an i-th first frame in a first manner to obtain first check information of the i-th first frame; and to fill or place the first check information of the i-th first frame into a second overhead area of an (i+2)-th first frame, where i is a positive integer.

In the above solution, the first manner is bit-interleaved parity check; and the first check information is check information of the bit-interleaved parity check.

In a seventh aspect, an embodiment of the present disclosure provides a transmission apparatus applied to a first device; and the apparatus includes a second processing unit and a second communication unit; wherein
the second processing unit is configured to map a first service into a first frame, wherein the first frame includes first indication information, and the first indication information is used to indicate a starting position of a first complete code block in a payload area of the first frame among a code block stream carried by the first frame; and to multiplex and/or map the first frame into a second frame;
the second communication unit is configured to send the second frame.

In the above solution, the second processing unit is configured to encode a third frame to obtain a code block stream, wherein the third frame is used to carry the first service; and to map the code block stream into the first frame.

In the above solution, the first frame includes a first overhead area.

In the above solution, the first overhead area is located in columns 1905 to 1920 of the first frame, and the payload area of the first frame is located in columns 17 to 1904 and columns 1921 to 3824 of the first frame.

In the above solution, the second processing unit is configured to check the third frame in a second manner to obtain second check information; to encode the third frame and the second check information to obtain the code block stream, or to encode the third frame and obtain the code block stream based on the second check information and the encoded third frame.

In the above solution, the second processing unit is configured to fill or place the first four bytes of the third frame into a start code block of the code block stream, and/or to fill or place the second check information into a last data code block or an end code block of the code block stream.

In the above solution, the second processing unit is configured to fill or place the third frame into data code blocks of the code block stream, and/or to fill or place the second check information into a first idle code block after an end code block of the code block stream.

In the above solution, the code block stream is a 64B/66B encoded block stream.

In the above solution, the second manner is cyclic redundancy check; and the second check information is check information of the cyclic redundancy check.

In an eighth aspect, an embodiment of the present disclosure provides a transmission apparatus applied to a second device; and the apparatus includes a third communication unit and a third processing unit; wherein
the third communication unit is configured to receive a second frame sent by a first device;
the third processing unit is configured to perform demultiplexing and/or demapping on the second frame to obtain a first frame, wherein the first frame includes at least a first overhead area; and to perform demapping on the first frame to obtain a first service.

In the above solution, the first overhead area is located in columns 1905 to 1920 of the first frame.

In the above solution, the first frame further includes a payload area, and the payload area is located in columns 17 to 1904 and columns 1921 to 3824 of the first frame; the third processing unit is further configured to obtain first check information of an i-th first frame from a second overhead area of an (i+2)-th first frame, wherein the first check information is obtained by the first device checking data carried by the payload area of the i-th first frame in a first manner; and i is a positive integer.

In the above solution, the first manner is bit-interleaved parity check; and the first check information is check information of the bit-interleaved parity check.

In a ninth aspect, an embodiment of the present disclosure provides a transmission apparatus applied to a second device; and the apparatus includes a fourth communication unit and a fourth processing unit; wherein
the fourth communication unit is configured to receive a second frame sent by a first device;
the fourth processing unit is configured to perform demultiplexing and/or demapping on the second frame to obtain a first frame, wherein the first frame includes first indication information, and the first indication information is used to indicate a starting position of a first complete code block in a payload area of the first frame among a code block stream carried by the first frame; and to perform demapping on the first frame based on the first indication information to obtain a first service.

In the above solution, the fourth processing unit is configured to obtain a code block stream based on the first indication information, to decode the code block stream to obtain a third frame, and to obtain the first service from the third frame.

In the above solution, the first frame includes a first overhead area.

In the above solution, the first overhead area is located in columns 1905 to 1920 of the first frame, and the payload area of the first frame is located in columns 17 to 1904 and columns 1921 to 3824 of the first frame.

In the above solution, the fourth processing unit is configured to obtain the third frame from a start code block and data code blocks of the code block stream, and/or to obtain second check information from a last data code block or an end code block of the code block stream, wherein the second check information is check information obtained by the first device checking the third frame in a second manner.

In the above solution, the fourth processing unit is configured to obtain the third frame from data code blocks of the code block stream, and/or to obtain second check information from a first idle code block after an end code block of the code block stream, wherein the second check information is check information obtained by the first device checking the third frame in a second manner.

In the above solution, the code block stream is a 64B/66B encoded block stream.

In the above solution, the second manner is cyclic redundancy check; and the second check information is check information of the cyclic redundancy check.

In a tenth aspect, an embodiment of the present disclosure provides a transmission apparatus applied to a second device; and the apparatus includes a fifth communication unit and a fifth processing unit; wherein
the fifth communication unit is configured to receive a second frame sent by a first device;
the fifth processing unit is configured to perform demultiplexing and/or demapping on the second frame to obtain a first frame, to decode a code block stream carried by the first frame to obtain a third frame, to check the third frame in a second manner to obtain third check information; and to compare the third check information with second check information, and to replace one or more data code blocks or an end code block of the code block stream with error code blocks if the third check information is different from the second check information, wherein the second check information is check information obtained by the first device checking the third frame in the second manner.

In the above solution, the first frame includes first indication information, and the first indication information is used to indicate a starting position of a first complete code block in a payload area of the first frame among the code block stream carried by the first frame.

In the above solution, the first frame includes a first overhead area.

In the above solution, the first overhead area is located in columns 1905 to 1920 of the first frame, and the payload area of the first frame is located in columns 17 to 1904 and columns 1921 to 3824 of the first frame.

In the above solution, the fifth processing unit is configured to obtain the third frame from a start code block and data code blocks of the code block stream, and/or to obtain second check information from a last data code block or an end code block of the code block stream.

In the above solution, the fifth processing unit is configured to obtain the third frame from data code blocks of the code block stream, and/or to obtain second check information from a first idle code block after an end code block of the code block stream.

In the above solution, the code block stream is a 64B/66B encoded block stream.

In the above solution, the second manner is cyclic redundancy check; and both the second check information and the third check information are check information of the cyclic redundancy check.

In an eleventh aspect, an embodiment of the present disclosure provides a computer-readable storage medium having computer instructions stored therein, the instructions, when executed by a processor, implement the steps of the method according to the first aspect, the second aspect, the third aspect, the fourth aspect, or the fifth aspect.

In a twelfth aspect, an embodiment of the present disclosure provides a communication device, including a memory, a processor, and a computer program stored in the memory and executable by the processor, where the processor is configured to implement the steps of the method according to the first aspect, the second aspect, the third aspect, the fourth aspect, or the fifth aspect when executing the program.

Embodiments of the present disclosure provide a transmission method, apparatus, device, and computer storage medium. A first service is mapped into a first frame, where the first frame includes at least a first overhead area, the first frame multiplexed and/or mapped into a second frame, and the second frame is sent. The first frame includes at least a first overhead area, which can increase the occurrence frequency of the frame overhead, and solve the problem of long alarm detection time for operators caused by low occurrence frequency of the frame overhead.

### BRIEF DESCRIPTION OF THE DRAWINGS

FIG. 1 is a first exemplary flowchart of a transmission method according to an embodiment of the present disclosure;
FIG. 2 is a schematic diagram of a frame structure of a first frame according to an embodiment of the present disclosure;
FIG. 3 is a schematic diagram of filling or placing first check information of an i-th first frame into a second overhead area of an (i+2)-th first frame according to an embodiment of the present disclosure;
FIG. 4 is a second exemplary flowchart of a transmission method according to an embodiment of the present disclosure;
FIG. 5 is a third exemplary flowchart of a transmission method according to an embodiment of the present disclosure;
FIG. 6 is a fourth exemplary flowchart of a transmission method according to an embodiment of the present disclosure;
FIG. 7 is a fifth exemplary flowchart of a transmission method according to an embodiment of the present disclosure;
FIG. 8A is a schematic diagram of a comparison between an fgODU frame and a routine ODU frame according to an embodiment of the present disclosure;
FIG. 8B is a schematic diagram of mapping a 64B/66B encoded block stream into an fgODU frame according to an embodiment of the present disclosure;
FIG. 8C is a schematic diagram of encoding a MAC frame with CRC32 check information added to obtain a 64B/66B encoded block stream according to an embodiment of the present disclosure;
FIG. 9 is a first schematic diagram of a composition structure of a transmission apparatus according to an embodiment of the present disclosure;
FIG. 10 is a second schematic diagram of a composition structure of a transmission apparatus according to an embodiment of the present disclosure;
FIG. 11 is a third schematic diagram of a composition structure of a transmission apparatus according to an embodiment of the present disclosure;
FIG. 12 is a fourth schematic diagram of a composition structure of a transmission apparatus according to an embodiment of the present disclosure;
FIG. 13 is a fifth schematic diagram of a composition structure of a transmission apparatus according to an embodiment of the present disclosure;
FIG. 14 is a schematic diagram of a hardware composition structure of a communication device according to an embodiment of the present disclosure.

### DETAILED DESCRIPTION

The present disclosure is further described in detail below with reference to the accompanying drawings and specific embodiments.

The technical solutions of the embodiments of the present disclosure can be applied to various communication systems, such as the Global System of Mobile communication (GSM) system, the Long Term Evolution (LTE) system, or the 5G system. Optionally, the 5G system or 5G network may also be referred to as the New Radio (NR) system or NR network.

Exemplarily, the communication system to which the embodiments of the present disclosure are applied may include a network device and a terminal device (which may also be referred to as a terminal, a communication terminal, etc.); the network device may be a device that communicates with the terminal device. The network device can provide communication coverage within a certain area and can communicate with terminals located in the area. Optionally, the network device may be a base station in various communication systems, such as an Evolved Node B (eNB) in the LTE system, or a base station (gNB) in the 5G system or NR system.

It should be understood that a device with a communication function in a network/system in the embodiments of the present disclosure may be referred to as a communication device. The communication device may include a network device and a terminal with communication functions, and the network device and the terminal device may be the specific devices described above, which are not repeated here; the communication device may also include other devices in the communication system, such as a network controller, a Mobility Management Entity (MME), and other network entities, which are not limited in the embodiments of the present disclosure.

It should be understood that the terms "system" and "network" are often used interchangeably herein. The term "and/or" herein is merely a relational description describing associated objects, indicating that three relationships may exist. For example, A and/or B may indicate three cases: A exists alone, both A and B exist, and B exists alone. In addition, the character "/" herein generally indicates that the associated objects before and after are in an "or" relationship.

The terms "first", "second", etc. in the specification and claims of the present disclosure are used to distinguish similar objects, and are not necessarily used to describe a specific order or sequence. It should be understood that the data used in this way can be interchanged under appropriate circumstances so that the embodiments of the present disclosure described herein can be implemented in an order other than those illustrated or described herein, for example. In addition, the terms "comprising" and "having" and any variations thereof are intended to cover non-exclusive inclusion. For example, a process, method, system, product, or device that includes a series of steps or units is not necessarily limited to those steps or units explicitly listed, but may include other steps or units not explicitly listed or inherent to such a process, method, product, or device.

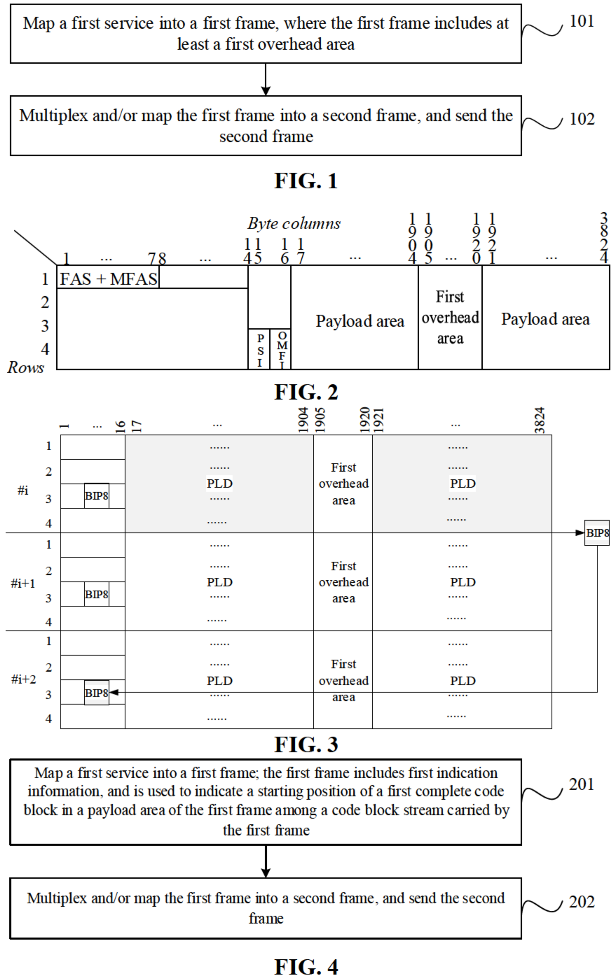

An embodiment of the present disclosure provides a transmission method, which is applied to a first device. FIG. 1 is a first exemplary flowchart of a transmission method according to the embodiment of the present disclosure. As shown in FIG. 1, the method includes the following operations.

At Step 101, a first service is mapped into a first frame. The first frame includes at least a first overhead area.

At Step 102, the first frame is multiplexed and/or mapped into a second frame, and the second frame is sent.

In this embodiment, the first device is a communication device or an optical communication device. In the data transmission process, the first device may be a transmitting terminal device, a transmitter device, a sending device, a source device, a source node, or the like.

In the various embodiments of the present disclosure, the first service may be referred to as a service, data, a signal, a client service, client data, a client signal, service data, a service signal, etc., and the above names may be equivalently replaced as needed.

In some embodiments, the step 101 may include: multiplexing and/or mapping a third frame into the first frame, where the third frame carries the first service. Optionally, when the first service is an Ethernet service, the third frame may be, for example, a Media Access Control (MAC) frame carrying Ethernet service data.

As an example, the first overhead area may be located in the middle area of the first frame, and payload areas of the first frame are distributed on both sides of the first overhead area. For example, the frame structure of the first frame is a second overhead area, a first payload area, a first overhead area, and a second payload area in sequence from head to tail. The second overhead area is a routine overhead area located at the frame header, and the first overhead area is an additional overhead area located in the middle of the frame and composed of fixed byte columns, that is, the fixed byte columns in each row of the first frame form the first overhead area.

Optionally, the first overhead area may be used to carry Operation Administration and Maintenance (OAM) information, such as OAM information of the first service.

In step 102, the first device multiplexes and/or maps the first frame into the second frame, which may include that: the first device multiplexes and/or maps the first frame into the second frame by using a Generic Mapping Procedure (GMP).

In some examples, the OTN has introduced mechanisms such as fgOTN and OSU to carry small granularities of 10 Mbit/s to 1 Gbit/s. For example, a Fine Granularity ODU/ Fine grain ODU (fgODU) frame is further encapsulated into an Optical Payload Unit (OPU) frame (or it can be said that the fgODU frame is multiplexed/mapped into a Fine Granularity Optical Channel Data Tributary Unit (fgODTU) frame, and the fgODTU frame is further multiplexed/mapped into an OPU frame), and the OPU frame is further encapsulated into an Optical Data Unit (ODU) frame, etc. In some optional embodiments, the first frame may also be referred to as an fgODU frame, an OSU frame, or a sub-1G frame, and the second frame may also be referred to as an ODU frame, an Optical Channel Transport Unit (OTU) frame, or an OPU frame. Optionally, in the various embodiments of the present disclosure, the multiplexing and/or mapping may also be equivalent to concatenation, multiplexing mapping, concatenation mapping, Multiplexing (abbreviated as MUX), Mapping, Mapping and Multiplexing, etc., and the above processing names may be equivalently replaced as needed.

In some optional embodiments, the first device sending the second frame may mean that the sent message only includes the second frame, or the sent message includes the second frame, and may further include other information besides the second frame. For example, the sent message is an OTU frame, where the OTU frame includes an ODU frame, the ODU frame includes an OPU frame, and the OPU frame includes an fgODU frame.

By adopting the transmission method of the embodiment of the present disclosure, the first frame includes at least the first overhead area, which can increase the occurrence frequency of the frame overhead, enable small-granularity services to respond to network changes faster, accelerate the network alarm protection process, and solve the problem of long alarm detection time for operators caused by the low occurrence frequency of the frame overhead.

In an optional embodiment of the present disclosure, the first overhead area may be located in columns 1905 to 1920 of the first frame.

In the various embodiments of the present disclosure, a frame is composed of rows and columns, where the columns are counted in bytes, and one column may also be referred to as one byte column.

In some embodiments, columns 1905 to 1920 in each row of the first frame are all the first overhead area. As an example, FIG. 2 is a schematic diagram of a frame structure of the first frame according to the embodiment of the present disclosure. As shown in FIG. 2, the first frame may be a frame structure of 4 rows and 3824 columns, then columns 1905 to 1920 of the first frame are the first overhead area, and the first overhead area may include 4 rows and 16 columns.

In some embodiments, as shown in FIG. 2, the first frame further includes a second overhead area, which is located in columns 1 to 16 of the first frame. The second overhead area may be used to carry a Frame Alignment Signal (FAS), a MultiFrame Alignment Signal (MFAS), a Payload Structure Identifier (PSI), an OPU/ODU MultiFrame Identifier (OMFI), etc.

It can be understood that this embodiment adds an additional overhead area, namely the first overhead area, in columns 1905 to 1920, which can be used to carry OAM information, such as OAM information of the first service, thereby shortening the alarm detection time for operators.

In an optional embodiment of the present disclosure, the first frame may further include a payload area, which may be located in columns 17 to 1904 and columns 1921 to 3824 of the first frame. The method may further include: checking data carried by the payload area of an i-th first frame in a first manner to obtain first check information of the i-th first frame; and filling or placing the first check information of the i-th first frame into a second overhead area of an (i+2)-th first frame, where i is a positive integer.

In this embodiment, filling or placing the first check information of the i-th first frame into the second overhead area of the (i+2)-th first frame may also be referred to as that the second overhead area of the (i+2)-th first frame includes, contains, places, carries, transmits, transports, is inserted with, or is added with, or etc. the first check information of the i-th first frame. It can be understood that the placement or filling described in this embodiment can be arbitrarily replaced based on the above actions.

In some optional embodiments, the filling or placing the first check information of the i-th first frame into the second overhead area of the (i+2)-th first frame may be: the second overhead area of the (i+2)-th first frame is used to place or fill the first check information of the i-th first frame, that is, the second overhead area of the (i+2)-th first frame contains the first check information of the i-th first frame. In other embodiments, it is not limited to that the second overhead area of the (i+2)-th first frame is used to place or fill the first check information of the i-th first frame; the second overhead area of another n-th first frame may also contain the first check information of the i-th first frame, which is not limited in this embodiment, where n is a positive integer greater than i.

This embodiment proposes a new check rule for the first frame with the first overhead area added, and inserts the check result of the i-th frame into the (i+2)-th frame, which is suitable for small-granularity or small-bandwidth service transmission.

In this embodiment, the range for verifying the first frame int he first manner is columns 17 to 1904 and columns 1921 to 3824 of the first frame. The first frame may further include a second overhead area, which may be located in columns 1 to 16 of the first frame, that is, the first check information of the i-th first frame can be filled or placed into the overhead bits corresponding to the first check information in columns 1 to 16 of the (i+2)-th first frame.

In an optional embodiment of the present disclosure, the first manner is Bit Interleaved Parity-level (BIP); the first check information is check information of the bit-interleaved parity check. Optionally, the first manner may be, for example, BIP8 check, and the first check information may be, for example, BIP8 check information.

FIG. 3 is a schematic diagram of filling or placing the first check information of the i-th first frame into the second overhead area of the (i+2)-th first frame according to the embodiment of the present disclosure. As shown in FIG. 3, the first device may perform BIP8 check on columns 17 to 1904 and columns 1921 to 3824 of the i-th first frame to generate a BIP8 check result of the i-th first frame, and then insert the BIP8 check result of the i-th first frame into the BIP8 overhead position of the (i+2)-th first frame, where the BIP8 overhead position is located in the second overhead area, such as columns 1 to 16 of the first frame.

In the various embodiments of the present disclosure, the payload is also referred to as load or payload (or PLD), that is, the payload of the first frame may also be referred to as the load of the first frame or the payload (or PLD) of the first frame. Correspondingly, in the various embodiments of the present disclosure, the payload area is also referred to as the load area or payload area, that is, the payload area of the first frame may also be referred to as the load area of the first frame or the payload area of the first frame.

In the various embodiments of the present disclosure, overhead is also referred to as overhead, OH, etc.

An embodiment of the present disclosure further provides a transmission method, which is applied to a first device. FIG. 4 is a second exemplary flowchart of the transmission method according to the embodiment of the present disclosure. As shown in FIG. 4, the method includes the following operations.

At Step 201, a first service is mapped into a first frame. The first frame includes first indication information, where the first indication information is used to indicate a starting position of a first complete code block in a payload area of the first frame among a code block stream carried by the first frame.

At Step 202, the first frame is multiplexed and/or mapped into a second frame, and the second frame is sent.

In this embodiment, the first device is a communication device or an optical communication device. In the data transmission process, the first device may be a transmitting terminal device, a transmitter device, a sending device, a source device, a source node, or the like.

In this embodiment, the code block stream carried by the first frame may be obtained by encoding a third frame, for example, and the third frame may be used to carry the first service.

In the various embodiments of the present disclosure, the first service may be referred to as a service, data, a signal, a client service, client data, a client signal, service data, a service signal, etc., and the above names may be equivalently replaced as needed.

In some optional embodiments, the first frame may also be referred to as an fgODU frame, an OSU frame, or a sub-1G frame, and the second frame may also be referred to as an ODU frame, an OTU frame, or an OPU frame. Optionally, in the various embodiments of the present disclosure, the multiplexing and/or mapping may also be equivalent to concatenation, multiplexing mapping, concatenation mapping, Multiplexing (abbreviated as MUX), Mapping, Mapping and Multiplexing, etc., and the above processing names may be equivalently replaced as needed.

As an example, the first overhead area may be located in the middle area of the first frame, and payload areas of the first frame are distributed on both sides of the first overhead area. For example, the frame structure of the first frame is a second overhead area, a first payload area, a first overhead area, and a second payload area in sequence from head to tail. The second overhead area is a routine overhead area located at the frame header, and the first overhead area is an additional overhead area located in the middle of the frame and composed of fixed byte columns, that is, the fixed byte columns in each row of the first frame form the first overhead area.

Optionally, the first indication information is located in the second overhead area, such as columns 1 to 16 of the first frame.

In some embodiments, the step 201 may include: mapping the code block stream into the first frame by using the Idle Mapping Procedure (IMP). The rate adaptation can be performed by adding or deleting idle code blocks in the code block stream.

As an implementation manner, the first indication information directly indicates the starting position of the first complete code block in the payload area of the first frame among the code block stream carried by the first frame, such as the column or bit position where the first complete code block is located; as another implementation manner, the first indication information indicates an attribute value corresponding to the first frame, and first frames with different attribute values have different starting positions. For example, the attribute value is a numerical value, and the starting position of the first complete code block in the payload area of the first frame among the code block stream carried by the first frame corresponding to different numerical values of the first indication information can be agreed in a pre-agreed manner.

In some optional embodiments, the payload areas of N first frames exactly carry M complete code blocks (both N and M are positive integers). The first indication information may take values from 1 to N (or from 0 to N-1), for example. When the first indication information included in the first frame is 1, it may indicate that the starting position of the first complete code block in the payload area of the first frame among the code block stream carried by the first frame is x1; when the first indication information included in the first frame is 2, it may indicate that the starting position of the first complete code block in the payload area of the first frame among the code block stream carried by the first frame is x2; and so on. When the first indication information included in the first frame is N, it may indicate that the starting position of the first complete code block in the payload area of the first frame among the code block stream carried by the first frame is xN, where x1, x2, ..., xN are different numerical values. Thus, for all first frames, the starting positions of the corresponding first complete code blocks can be determined through the first indication information.

In step 202, the first device multiplexing and/or mapping the first frame into the second frame may include: the first device multiplexing and/or mapping the first frame into the second frame by using the GMP.

In some optional embodiments, the first frame may also be referred to as an fgODU frame, an OSU frame, or a sub-1G frame, and the second frame may also be referred to as an ODU frame, an OTU frame, or an OPU frame. Optionally, in the various embodiments of the present disclosure, the multiplexing and/or mapping may also be equivalent to concatenation, multiplexing mapping, concatenation mapping, Multiplexing (abbreviated as MUX), Mapping, Mapping and Multiplexing, etc., and the above processing names may be equivalently replaced as needed.

In some optional embodiments, the first device sending the second frame may mean that the sent message only includes the second frame, or the sent message includes the second frame, and may further include other information besides the second frame. For example, the sent message is an OTU frame, where the OTU frame includes an ODU frame, the ODU frame includes an OPU frame, and the OPU frame includes an fgODU frame.

This embodiment proposes a new code block stream positioning method for small-granularity signals with a transmission rate of 10 Mbit/s to 1 Gbit/s, and uses the first indication information carried in the first frame to indicate the starting position of the first complete code block in the payload area of the first frame among the code block stream carried by the first frame.

In an optional embodiment of the present disclosure, the mapping a first service into a first frame may include: encoding a third frame to obtain a code block stream, where the third frame is used to carry the first service; and mapping the code block stream into the first frame.

Optionally, the code block stream may be a 64B/66B encoded block stream. The encoding a third frame to obtain a code block stream may include: performing 64B/66B encoding on the third frame to obtain the code block stream.

In an optional embodiment of the present disclosure, the first frame may include a first overhead area. Optionally, the first overhead area may be used to carry OAM information.

As an example, the first overhead area may be fixed byte columns. For example, the first overhead area may be located in columns 1905 to 1920 of the first frame, and the payload area of the first frame is located in columns 17 to 1904 and columns 1921 to 3824 of the first frame.

In some embodiments, the first frame has a structure of 4 rows and 3824 columns, the payload area of the first frame includes columns 17 to 1904 and columns 1921 to 3824, the code block stream is a 64B/66B encoded block stream, and the payload areas of every 11 frames will exactly be mapped to 20224 64B/66B encoded blocks. The 11 frames can be identified by different first indication information. Optionally, the first indication information may be located in row 4 and column 16 of the first frame. The first indication information increases from 0 to 10 in sequence, incrementing by 1 per frame, and counting cyclically. In the payload areas of the 11 frames, the positions of the mapped 20224 64B/66B encoded blocks are fixed. Table 1 shows exemplary starting positions of the first complete 64B/66B encoded block carried by the payload area of the first frame.

**Table 1**

| Starting positions of the first complete 64B/66B encoded block carried by the payload area of the first frame | Starting positions of the first complete 64B/66B encoded block carried by the payload area of the first frame |
|---|---|
| 0 | 0 |
| 1 | 30 |
| 2 | 60 |
| 3 | 24 |
| 4 | 54 |
| 5 | 18 |
| 6 | 48 |
| 7 | 12 |
| 8 | 42 |
| 9 | 6 |
| 10 | 36 |

As shown in Table 1, in the first one of the first frames where the value of the first indication information is 0, the 64B/66B encoded block is aligned with the start of the payload of the first one of the first frames (i.e., at a bit position in column 17); in the second one of the first frames where the value of the first indication information is 1, the 64B/66B encoded block is aligned with the 30th bit position of the payload of the second one of the first frames; in the third one of the first frames where the value of the first indication information is 2, the 64B/66B encoded block is aligned with the 66th bit position of the payload of the third one of the first frames; and so on. In the eleventh one of the first frames where the value of the first indication information is 10, the 64B/66B encoded block is aligned with the 36th bit position of the payload of the eleventh one of the first frames, and the 20224th 64B/66B encoded block is aligned with the end of the payload of the eleventh one of the first frames (i.e., the last bit position in column 3824).

In an optional embodiment of the present disclosure, the encoding a third frame to obtain a code block stream may include: checking the third frame in a second manner to obtain second check information; encoding the third frame and the second check information to obtain the code block stream, or encoding the third frame and obtaining the code block stream based on the second check information and the encoded third frame.

In some embodiments, the first service is an Ethernet service, and the third frame may be a MAC frame or an Ethernet MAC frame.

Optionally, the second manner is Cyclic Redundancy Check (CRC); and the second check information is check information of the cyclic redundancy check. For example, the second manner may be CRC32, the second check information may be CRC32 check information, and the check polynomial of the CRC32 check manner is G(x)=x^32 + x^26 + x^23 + x^22 + x^16 + x^12 + x^11 + x^10 + x^8 + x^7 + x^5 + x^4 + x^2 + x + 1.

As an optional implementation manner, the checking the third frame in a second manner includes: performing reverse-order check on each byte of the third frame in a CRC manner. For example, performing reverse-order check on each byte of the MAC frame in a CRC32 check manner.

In one embodiment, the third frame may be a MAC frame carrying Ethernet service data, for example. The first device performs CRC32 check on the MAC frame to obtain a CRC32 check result, adds the CRC32 check result to the end of the MAC frame, and performs 64B/66B encoding on the MAC frame with the CRC32 check result added to obtain a 64B/66B encoded block stream. Alternatively, the first device performs CRC32 check on the MAC frame to obtain a CRC32 check result, performs 64B/66B encoding on the MAC frame, and obtains the 64B/66B encoded block stream based on the encoded MAC frame (in the form of a 64B/66B encoded block stream) and the CRC32 check result. Further, the 64B/66B encoded block stream may be mapped into the first frame in the IMP mapping manner.

In an optional embodiment of the present disclosure, the encoding the third frame and the second check information to obtain the code block stream may include: filling or placing the first four bytes of the third frame into a start code block of the code block stream, and/or filling or placing the second check information into a last data code block or an end code block of the code block stream.

In this embodiment, the filling or placing the first four bytes of the third frame into the start code block of the code block stream may also be referred to as that the start code block of the code block stream includes, contains, places, carries, transmits, transports, is inserted with, or is added with the first four bytes of the third frame, etc.; the filling or placing the second check information into the last data code block or the end code block of the code block stream may also be referred to as that the last data code block or the end code block of the code block stream includes, contains, places, carries, transmits, transports, inserts, or adds the second check information, etc. It can be understood that the placement or filling described in this embodiment can be arbitrarily replaced based on the above actions.

It can be understood that, in this embodiment, to make room for the third frame with the second check information added without increasing bandwidth, the third frame is shifted during encoding, so that the first four octets of the third frame are placed into the data bytes of the start code block (S code block) of the 64B/66B encoded block stream, and the remaining part of the third frame and the second check information are sequentially placed into the data code blocks (D code blocks) and the end code block (T code block) of the 64B/66B encoded block stream. Thus, the second check information will be filled or placed into the last D code block of the 64B/66B encoded block stream or the T code block of the code block stream.

In an optional embodiment of the present disclosure, the encoding the third frame and the second check information to obtain the code block stream may include: filling or placing the third frame into data code blocks of the code block stream, and/or filling or placing the second check information into a first idle code block after an end code block of the code block stream.

In this embodiment, after the second check information is added to the end of the third frame, the bytes of the third frame are placed or filled into the D code blocks of the 64B/66B encoded block stream during encoding, and the second check information is placed or filled into the first idle code block (I code block) after the T code block of the 64B/66B encoded block stream.

In this embodiment, the filling or placing the third frame into the data code blocks of the code block stream may also be referred to as that the data code blocks of the code block stream include, contain, place, carry, transmit, transport, is inserted with, or is added with the third frame, etc.; the filling or placing the second check information into the first idle code block after the end code block of the code block stream may also be referred to as that the first idle code block after the end code block of the code block stream includes, contains, places, carries, transmits, transports, is inserted with, or is added with the second check information, etc. It can be understood that the placement or filling described in this embodiment can be arbitrarily replaced based on the above actions.

The transmission method of this embodiment proposes a new check mechanism for small-granularity or small-bandwidth services: filling or placing the first four bytes of the third frame into the start code block of the code block stream, and filling or placing the second check information into the last data code block or the end code block of the code block stream; or filling or placing the third frame into the data code blocks of the code block stream, and filling or placing the second check information into the first idle code block after the end code block of the code block stream. This enables timely notification to other layered networks when transmission errors occur in small-granularity or small-bandwidth services, ensuring the accuracy and efficiency of small-granularity or small-bandwidth service transmission.

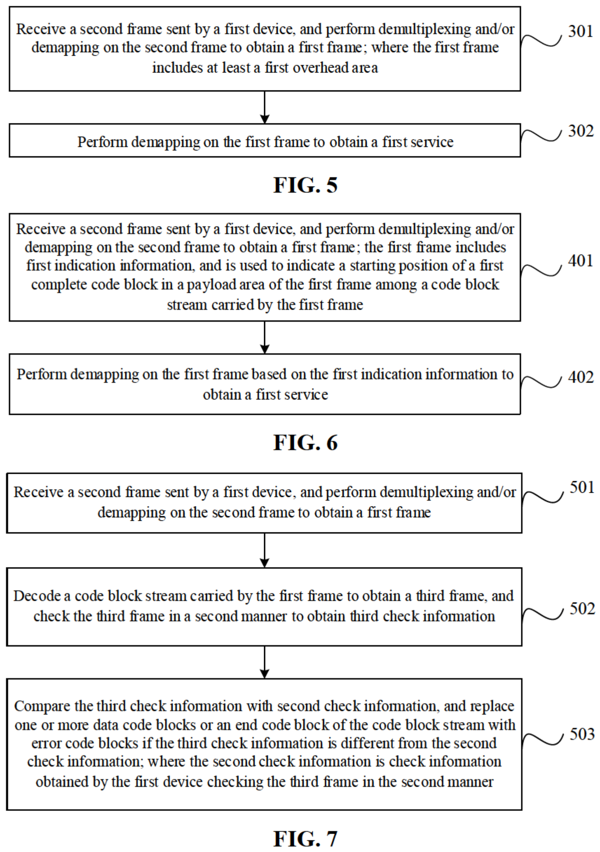

An embodiment of the present disclosure provides a transmission method applied to a second device. FIG. 5 is a third exemplary flowchart of the transmission method according to the embodiment of the present disclosure. As shown in FIG. 5, the method includes the following operations.

At Step 301, a second frame sent by a first device is received, and demultiplexing and/or demapping is performed on the second frame to obtain a first frame. The first frame includes at least a first overhead area.

At Step 302, demapping is performed on the first frame to obtain a first service.

In this embodiment, the second device is a communication device or an optical communication device. In the data transmission process, the second device may be, for example, a receiving terminal device, a receiving device, a sink device, a sink node, a destination device, etc.

In this embodiment, the second frame received by the second device is the same as the second frame obtained by multiplexing and/or mapping by the first device. The processing procedure of the second frame and the first frame in the second device is the inverse process of the processing procedure of the first device in the foregoing embodiments, and reference may be made to the relevant descriptions of the foregoing embodiments, which are not repeated here.

In some optional embodiments, the first frame may also be referred to as an fgODU frame, an OSU frame, or a sub-1G frame, and the second frame may also be referred to as an ODU frame, an OTU frame, or an OPU frame.

In the various embodiments of the present disclosure, the first service may be referred to as a service, data, a signal, a client service, client data, a client signal, service data, a service signal, etc., and the above names may be equivalently replaced as needed.

Optionally, the aforementioned demultiplexing or demapping may also be equivalent to deconcatenation, demultiplexing mapping, deconcatenation mapping, Demultiplexing (abbreviated as DMUX), Demapping, Demapping and Demultiplexing, etc.; the aforementioned multiplexing or mapping may also be equivalent to concatenation, multiplexing mapping, concatenation mapping, Multiplexing (abbreviated as MUX), Mapping, Mapping and Multiplexing, etc.

In some optional embodiments, the second device receiving the second frame sent by the first device may mean that the received message only includes the second frame, or the received message includes the second frame, and may also include other information besides the second frame. For example, the received message is an OTU frame, where the OTU frame includes an ODU frame, the ODU frame includes an OPU frame, and the OPU frame includes an fgODU frame.

In an optional embodiment of the present disclosure, the first overhead area may be located in columns 1905 to 1920 of the first frame.

In an optional embodiment of the present disclosure, the first frame may further include a payload area located in columns 17 to 1904 and columns 1921 to 3824 of the first frame; and the method may further include: obtaining first check information of an i-th first frame from a second overhead area of an (i+2)-th first frame, where the first check information is obtained by the first device checking data carried by the payload area of the i-th first frame in a first manner; and i is a positive integer.

In an optional embodiment of the present disclosure, the first manner may be BIP check; the first check information is check information of the BIP check. For example, the first manner may be BIP8 check, and the first check information may be check information of the BIP8 check.

An embodiment of the present disclosure further provides a transmission method applied to a second device. FIG. 6 is a fourth exemplary flowchart of the transmission method according to the embodiment of the present disclosure. As shown in FIG. 6, the method includes the following operations.

At Step 401, a second frame sent by a first device is received, and demultiplexing and/or demapping is performed on the second frame to obtain a first frame; the first frame includes first indication information, where the first indication information is used to indicate a starting position of a first complete code block in a payload area of the first frame among a code block stream carried by the first frame.

At Step 402, demapping is performed on the first frame based on the first indication information to obtain a first service.

In this embodiment, the second device is a communication device or an optical communication device. In the data transmission process, the second device may be, for example, a receiving terminal device, a receiving device, a sink device, a sink node, a destination device, etc.

In this embodiment, the second frame received by the second device is the same as the second frame obtained by multiplexing and/or mapping by the first device. The processing procedure of the second frame and the first frame in the second device is the inverse process of the processing procedure of the first device in the foregoing embodiments, and reference may be made to the relevant descriptions of the foregoing embodiments, which are not repeated here.

In some optional embodiments, the first frame may also be referred to as an fgODU frame, an OSU frame, or a sub-1G frame, and the second frame may also be referred to as an ODU frame, an OTU frame, or an OPU frame.

Optionally, the aforementioned demultiplexing or demapping may also be equivalent to deconcatenation, demultiplexing mapping, deconcatenation mapping, Demultiplexing (abbreviated as DMUX), Demapping, Demapping and Demultiplexing, etc.; the aforementioned multiplexing or mapping may also be equivalent to concatenation, multiplexing mapping, concatenation mapping, Multiplexing (abbreviated as MUX), Mapping, Mapping and Multiplexing, etc.

In the various embodiments of the present disclosure, the first service may be referred to as a service, data, a signal, a client service, client data, a client signal, service data, a service signal, etc., and the above names may be equivalently replaced as needed.

In some optional embodiments, the second device receiving the second frame sent by the first device may mean that the received message only includes the second frame, or the received message includes the second frame, and may further include other information besides the second frame. For example, the received message is an OTU frame, where the OTU frame includes an ODU frame, the ODU frame includes an OPU frame, and the OPU frame includes an fgODU frame.

In an optional embodiment of the present disclosure, the performing demapping on the first frame based on the first indication information to obtain a first service may include: obtaining a code block stream based on the first indication information, decoding the code block stream to obtain a third frame, and obtaining the first service from the third frame.

In an optional embodiment of the present disclosure, the first frame may include a first overhead area. Optionally, the first overhead area may be used to carry OAM information.

In an optional embodiment of the present disclosure, the first overhead area may be fixed byte columns. For example, the first overhead area may be located in columns 1905 to 1920 of the first frame, and the payload area of the first frame is located in columns 17 to 1904 and columns 1921 to 3824 of the first frame.

In an optional embodiment of the present disclosure, the decoding the code block stream to obtain a third frame may include: obtaining the third frame from a start code block and data code blocks of the code block stream, and/or obtaining second check information from a last data code block or an end code block of the code block stream, where the second check information is check information obtained by the first device checking the third frame in a second manner.

In an optional embodiment of the present disclosure, the decoding the code block stream to obtain a third frame may include: obtaining the third frame from data code blocks of the code block stream, and/or obtaining second check information from a first idle code block after an end code block of the code block stream, where the second check information is check information obtained by the first device checking the third frame in a second manner.

In an optional embodiment of the present disclosure, the method may further include: checking the decoded third frame in a second manner to obtain third check information; comparing the second check information with the third check information, and replacing one or more data code blocks or an end code block of the code block stream with error code blocks if the second check information is different from the third check information; where the second check information is check information obtained by the first device checking the third frame in the second manner.

In this embodiment, when the second check information extracted by the second device from the first frame is different from the third check information obtained by the second device checking the third frame, the current D code block or T code block is replaced with an error code block (E code block).

In an optional embodiment of the present disclosure, the code block stream may be a 64B/66B encoded block stream.

In an optional embodiment of the present disclosure, the second manner may be a CRC; both the second check information and the third check information are CRC information. For example, the second manner may be a CRC32 check manner, and both the second check information and the third check information may be CRC32 check information.

An embodiment of the present disclosure further provides a transmission method applied to a second device. FIG. 7 is a fifth exemplary flowchart of the transmission method according to the embodiment of the present disclosure. As shown in FIG. 7, the method includes the following operations.

At Step 501, a second frame sent by a first device is received, and demultiplexing and/or demapping is performed on the second frame to obtain a first frame.

At Step 502, a code block stream carried by the first frame is decoded to obtain a third frame, and the third frame is checked in a second manner to obtain third check information.

At Step 503, the third check information is compared with second check information, and one or more data code blocks or an end code block of the code block stream is replaced with error code blocks if the third check information is different from the second check information. The second check information is check information obtained by the first device checking the third frame in the second manner.

In this embodiment, the second device is a communication device or an optical communication device. In the data transmission process, the second device may be, for example, a receiving terminal device, a receiving device, a sink device, a sink node, a destination device, etc.

In this embodiment, the second frame received by the second device is the same as the second frame obtained by multiplexing and/or mapping by the first device. The processing procedure of the second frame and the first frame in the second device is the inverse process of the processing procedure of the first device in the foregoing embodiments, and reference may be made to the relevant descriptions of the foregoing embodiments, which are not repeated here.

In the various embodiments of the present disclosure, the first service may be referred to as a service, data, a signal, a client service, client data, a client signal, service data, a service signal, etc., and the above names may be equivalently replaced as needed.

In some optional embodiments, the first frame may also be referred to as an fgODU frame, an OSU frame, or a sub-1G frame; the second frame may also be referred to as an ODU frame, an OTU frame, or an OPU frame; and the third frame may also be referred to as a MAC frame.

Optionally, the aforementioned demultiplexing or demapping may also be equivalent to deconcatenation, demultiplexing mapping, deconcatenation mapping, Demultiplexing (abbreviated as DMUX), Demapping, Demapping and Demultiplexing, etc.. The aforementioned multiplexing or mapping may also be equivalent to concatenation, multiplexing mapping, concatenation mapping, Multiplexing (abbreviated as MUX), Mapping, Mapping and Multiplexing, etc.

In some optional embodiments, the second device receiving the second frame sent by the first device may mean that the received message only includes the second frame, or the received message includes the second frame, and may further include other information besides the second frame. For example, the received message is an OTU frame, where the OTU frame includes an ODU frame, the ODU frame includes an OPU frame, and the OPU frame includes an fgODU frame.

By adopting the transmission method of the embodiment of the present disclosure, when the third check information is different from the second check information, the second device replaces one or more data code blocks or the end code block of the code block stream with error code blocks, that is, marks the code block stream when a transmission error is detected in small-granularity or small-bandwidth services, so that other layered networks can timely learn about the error, ensuring the accuracy and efficiency of small-granularity or small-bandwidth service transmission.

In an optional embodiment of the present disclosure, the first frame includes first indication information, where the first indication information is used to indicate a starting position of a first complete code block in a payload area of the first frame among the code block stream carried by the first frame. In this embodiment, for details of the first indication infonnation, reference may be made to the detailed descriptions in the foregoing embodiments, which are not repeated here.

In an optional embodiment of the present disclosure, the first frame includes a first overhead area.

As an example, the first overhead area may be located in the middle area of the first frame, and payload areas of the first frame are distributed on both sides of the first overhead area. For example, the frame structure of the first frame is a second overhead area, a first payload area, a first overhead area, and a second payload area in sequence from head to tail. The second overhead area is a routine overhead area located at the frame header, and the first overhead area is an additional overhead area located in the middle of the frame and composed of fixed byte columns, that is, the fixed byte columns in each row of the first frame form the first overhead area. Optionally, the first indication information is located in the second overhead area, such as columns 1 to 16 of the first frame.

In an optional embodiment of the present disclosure, the first overhead area is located in columns 1905 to 1920 of the first frame, and the payload area of the first frame is located in columns 17 to 1904 and columns 1921 to 3824 of the first frame.

In an optional embodiment of the present disclosure, the decoding a code block stream carried by the first frame to obtain a third frame includes: obtaining the third frame from a start code block and data code blocks of the code block stream, and/or obtaining second check information from a last data code block or an end code block of the code block stream.

In an optional embodiment of the present disclosure, the decoding a code block stream carried by the first frame to obtain a third frame includes: obtaining the third frame from data code blocks of the code block stream, and/or obtaining second check information from a first idle code block after an end code block of the code block stream.

In an optional embodiment of the present disclosure, the code block stream is a 64B/66B encoded block stream.

In an optional embodiment of the present disclosure, the second manner is cyclic redundancy check; both the second check information and the third check information are check information of the cyclic redundancy check.

Optionally, the second manner may be CRC32 check, for example, and the second check information and the third check information may be CRC32 check information, for example. The check polynomial of the CRC32 check manner is G(x)=x^32 + x^26 + x^23 + x^22 + x^16 + x^12 + x^11 + x^10 + x^8 + x^7 + x^5 + x^4 + x^2 + x + 1.

As an optional implementation manner, the third frame may be a MAC frame carrying Ethernet service data, for example. The checking the third frame in a second manner to obtain third check information may include: the second device performing reverse-order check on each byte of the third frame by using CRC to obtain the third check information. For example, performing reverse-order check on each byte of the MAC frame in a CRC32 check manner.

An embodiment of the present disclosure further provides a transmission method applied to a first device. The method includes: the first device sending a second frame to a second device, where the second frame includes a first frame, and the first frame includes at least a first overhead area.

In some embodiments, the first overhead area may be used to carry OAM information.

In some embodiments, the first overhead area is located in columns 1905 to 1920 of the first frame.

In some embodiments, the first frame further includes a payload area located in columns 17 to 1904 and columns 1921 to 3824 of the first frame. The method further includes: the first device checking data carried by the payload area of an i-th first frame in a first manner to obtain first check information of the i-th first frame; and filling or placing the first check information of the i-th first frame into a second overhead area of an (i+2)-th first frame, where i is a positive integer.

In some embodiments, the first manner is BIP check; and the first check information is BIP check information.

An embodiment of the present disclosure further provides a transmission method applied to a first device. The method includes: the first device sending a second frame to a second device, where the second frame includes a first frame, and the first frame includes first indication information, which used to indicate a starting position of a first complete code block in a payload area of the first frame among a code block stream carried by the first frame.

In some embodiments, the method further includes: the first device encoding a third frame to obtain a code block stream, where the third frame is used to carry the first service; and mapping the code block stream into the first frame.

In some embodiments, the first frame includes a first overhead area. Optionally, the first overhead area is used to carry OAM information.

In some embodiments, the first overhead area is located in columns 1905 to 1920 of the first frame, and the payload area of the first frame is located in columns 17 to 1904 and columns 1921 to 3824 of the first frame.

In some embodiments, the encoding a third frame to obtain a code block stream includes: the first device checking the third frame in a second manner to obtain second check information; and encoding the third frame and the second check information to obtain the code block stream, or encoding the third frame and obtaining the code block stream based on the second check information and the encoded third frame.

In some embodiments, the encoding the third frame and the second check information to obtain the code block stream includes: the first device filling or placing the first four bytes of the third frame into a start code block of the code block stream, and/or filling or placing the second check information into a last data code block or an end code block of the code block stream.

In some embodiments, the encoding the third frame and the second check information to obtain the code block stream includes: the first device filling or placing the third frame into data code blocks of the code block stream, and/or filling or placing the second check information into a first idle code block after an end code block of the code block stream.

In some embodiments, the code block stream is a 64B/66B encoded block stream.

In some embodiments, the second manner is Cyclic Redundancy Check (CRC); the second check information is CRC information.

The transmission solution of the embodiments of the present disclosure is described below with reference to specific application scenarios. In the following examples, the first device is taken as a source device and the second device is taken as a sink device, where the first frame is taken as an fgODU frame, the second frame is taken as an ODU frame or an OPU frame, and the third frame is taken as a MAC frame carrying Ethernet service data.

### Example 1

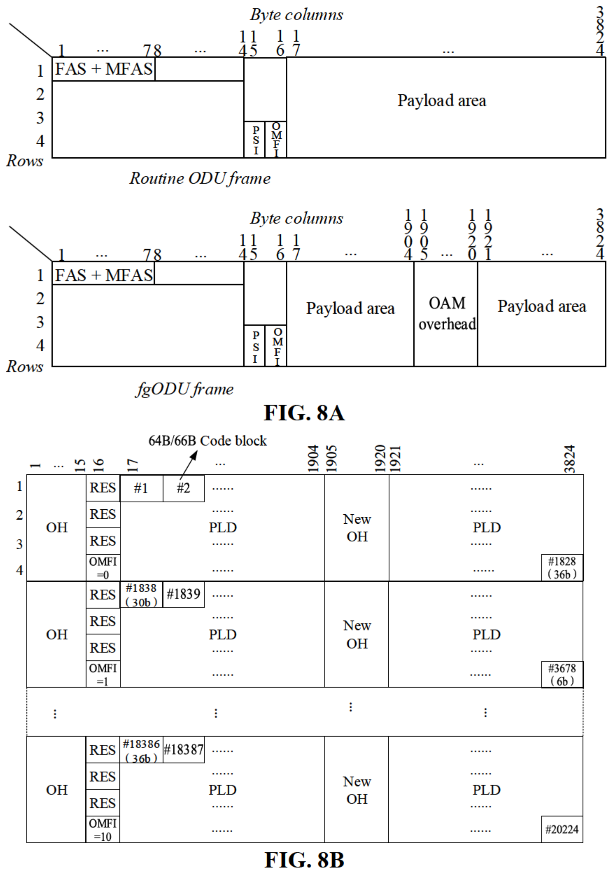

FIG. 8A is a schematic diagram of comparison of an fgODU frame with a routine ODU frame according to an embodiment of the present disclosure. As shown in FIG. 8A, the overhead area of the routine ODU frame is located in columns 1 to 16, and the payload area of the routine ODU frame is located in columns 17 to 3824. In the fgODU frame in this example, a new OAM overhead (i.e., the first overhead area) is inserted into the payload of the routine ODU frame, which is located in columns 1905 to 1920 of the fgODU frame. Thus, the payload area of the fgODU frame is located in columns 17 to 1904 and columns 1921 to 3824.

The source device may map the Ethernet service into the fgODU frame shown in FIG. 8A, where the fgODU frame includes the new OAM overhead. Then, the source device multiplexes and/or maps the fgODU frame into an ODU frame, an OPU frame, or an OTU frame, and sends the ODU frame, OPU frame, or OTU frame to the sink device. This enables small-granularity or small-bandwidth service transmission to respond to network changes faster and accelerates the network alarm protection process.

For the fgODU frame in FIG. 8A, the check range of the BIP8 check performed by the source device covers columns 17 to 1904 and columns 1921 to 3824 of the fgODU frame, i.e., the payload area of the fgODU frame.

Referring to FIG. 3, the source device performs BIP8 check on the i-th fgODU frame to obtain a BIP8 check result of the i-th frame (i.e., the first check information), and then inserts the BIP8 check result of the i-th frame into the BIP8 overhead position of the (i+2)-th frame. The BIP8 overhead position of the (i+2)-th frame falls within columns 1 to 16 of the (i+2)-th fgODU frame (i.e., the second overhead area). This provides a new BIP check rule for fgODU frames with the new overhead added. The sink device performs check calculation according to the same rule.

### Example 2

The source device may map the Ethernet service into the fgODU frame shown in FIG. 8A, where the fgODU frame includes an OMFI (i.e., the first indication information). The OMFI is used to indicate the starting position of the first complete code block in the payload area of the fgODU frame among the code block stream carried by the fgODU frame. Then, the source device multiplexes and/or maps the fgODU frame into an ODU frame, an OPU frame, or an OTU frame, and sends the ODU frame, OPU frame, or OTU frame to the sink device. Aiming at the low transmission rate characteristic of small-granularity or small-bandwidth services, this example proposes a new code block stream positioning method by using the OMFI carried in the fgODU frame.

Specifically, when mapping the Ethernet packet service into the fgODU frame, the source device may use the IMP to map the 64B/66B encoded block stream obtained by encoding the MAC frame carrying the Ethernet packet service into the payload area of the fgODU frame, and perform rate adaptation by adding or deleting 64B/66B idle code blocks. The fgODU frame may be identified by the OMFI to indicate the starting position of the first complete 64B/66B encoded block carried in the payload area of each fgODU frame within the payload area of the frame. For the payload area of the fgODU frame in FIG. 8A, the payload areas of every 11 fgODU frames will exactly map 20224 64B/66B encoded blocks. These 11 frames can be identified by the OMFI, which may be located at row 4 and column 16 of the fgODU frame. The OMFI increases sequentially from 0 to 10, incrementing by 1 per frame and counting cyclically. In the payload areas of these 11 frames, the position of the mapped 20224 64B/66B encoded blocks are fixed. The starting position of the first complete 64B/66B encoded block carried in the payload area of each fgODU frame can be found in Table 1.

FIG. 8B is a schematic diagram of mapping a 64B/66B encoded block stream into an fgODU frame according to an embodiment of the present disclosure. In FIG. 8B, "New OH" refers to the first overhead area described in the foregoing embodiments, "RES" indicates reservation for standardization, and "PLD" indicates payload. As shown in FIG. 8B, in the fgODU frame with OMFI = 0, the 64B/66B encoded block is aligned with the start of the payload capacity of the fgODU frame (i.e., starting from the first bit of column 17 of the fgODU frame), and the payload capacity of this fgODU frame ends with the first 36 bits of the 1838th 64B/66B encoded block. In the next fgODU frame (OMFI = 1), the remaining 30 bits of the 1838th 64B/66B encoded block are aligned with the start of the payload capacity of this fgODU frame, i.e., the starting position of the first complete 64B/66B encoded block in the payload area of the fgODU frame with OMFI = 1 is the 30th bit. By analogy, when OMFI = 10 (decimal), the last code block (i.e., the 20224th code block) of the 64B/66B encoded blocks is aligned with the end of the payload capacity of the fgODU frame. Thus, the OMFI can be used to locate the 64B/66B encoded blocks.

In this example, the source device may also perform error marking processing when performing 64B/66B encoding on the MAC frame. The error marking adopts a CRC32 check mark, of which the check polynomial is G(x)=x^32+x^26+x^23+x^22+x^16+x^12+x^11+x^10+x^8+x^7+x^5+x^4+x^2+x+1. Reverse-order check is performed on each byte of the MAC frame to obtain CRC32 check information (i.e., the second check information), which may also be referred to as the OTN Frame Check Sequence (OFCS).

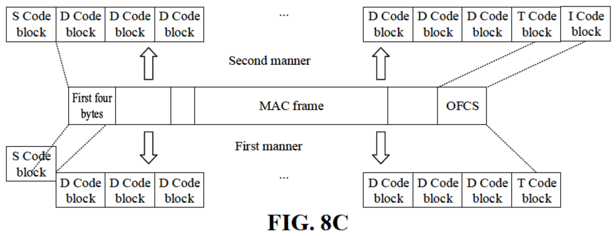

The source device encodes the Ethernet MAC frame to obtain a 64B/66B encoded block stream, where the boundaries of the MAC frame are marked by S code blocks and T code blocks respectively. FIG. 8C is a schematic diagram of encoding a MAC frame with CRC32 check information added to obtain a 64B/66B encoded block stream according to an embodiment of the present disclosure. As shown in the first manner in FIG. 8C, the source device may add the CRC32 check information (OFCS in FIG. 8C) to the end of the MAC frame, and shift the MAC frame during encoding, i.e., place the first 4 bytes of the MAC frame into the S code block, and sequentially place or fill the remaining bytes of the MAC frame and the CRC32 check information into D code blocks or T code blocks. The CRC32 check information is located in the last D code block or T code block after encoding.

In another example, after adding the CRC32 check information to the end of the MAC frame, the source device may not shift the MAC frame during encoding. As shown in the second manner in FIG. 8C, the bytes of the MAC frame are placed or filled into D code blocks, and the CRC32 check information is placed or filled into the first I code block after encoding.

After receiving the ODU frame, OPU frame, or OTU frame, the sink device performs demapping and/or demultiplexing to obtain the fgODU frame, and decodes the 64B/66B encoded block stream carried by the fgODU frame to obtain the corresponding MAC frame. Specifically, the MAC frame can be obtained from the S code blocks and D code blocks of the 64B/66B encoded block stream, and the CRC32 check information of the CRC32 check performed by the source device can be obtained from the last D code block or the T code block of the 64B/66B encoded block stream. Alternatively, the MAC frame can be obtained from the D code blocks of the 64B/66B encoded block stream, and the CRC32 check information of the CRC32 check performed by the source device can be obtained from the first I code block after the T code block of the 64B/66B encoded block stream.

This example proposes a check mechanism suitable for small-granularity or small-bandwidth service transmission, ensuring that other layered networks in the transmission process can be timely notified when a transmission error occurs.

### Example 3

The sink device may receive the ODU frame, OPU frame, or OTU frame sent by the source device, and perform demapping and/or demultiplexing on the ODU frame, OPU frame, or OTU frame to obtain an fgODU frame, such as the fgODU frame shown in FIG. 8A.

The sink device decodes the 64B/66B encoded block stream carried by the fgODU frame to obtain the MAC frame carrying Ethernet service data, performs CRC32 check on the MAC frame to obtain a CRC32 check result (i.e., the third check information), and extracts the error-marked CRC32 check information of the source device (i.e., the second check information) from the 64B/66B encoded block stream, for details, refer to Example 2. When the CRC32 check result obtained by the sink device through CRC32 check is different from the extracted CRC32 check information of the source device, the sink device may replace one or more D code blocks or the T code block in the 64B/66B encoded block stream with E code blocks.

In this example, when the sink device detects a transmission error in the small-granularity or small-bandwidth service, it marks the code block stream of the small-granularity or small-bandwidth service, enabling timely notification to other layered networks in the transmission process.

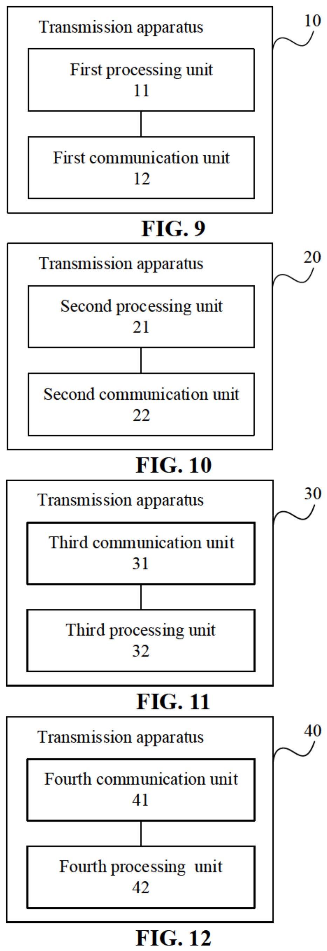

Embodiments of the present disclosure further provide a transmission apparatus applied to a first device. FIG. 9 is a first schematic diagram of a composition structure of a transmission apparatus according to an embodiment of the present disclosure. As shown in FIG. 9, the transmission apparatus 10 includes a first processing unit 11 and a first communication unit 12.

The first processing unit 11 is configured to map a first service into a first frame; where the first frame includes at least a first overhead area; and to multiplex and/or map the first frame into a second frame.

The first communication unit 12 is configured to send the second frame.

In an optional embodiment of the present disclosure, the first overhead area is located in columns 1905 to 1920 of the first frame.

In an optional embodiment of the present disclosure, the first frame further includes a payload area located in columns 17 to 1904 and columns 1921 to 3824 of the first frame; the first processing unit 11 is further configured to check data carried in the payload area of an i-th first frame in a first manner to obtain first check information of the i-th first frame; and to fill or place the first check information of the i-th first frame into a second overhead area of an (i+2)-th first frame, where i is a positive integer.

In an optional embodiment of the present disclosure, the first manner is BIP check; and the first check information is BIP check information.

In the embodiment of the present disclosure, in practical applications, the first processing unit 11 in the transmission apparatus 10 may be implemented by a Central Processing Unit (CPU), a Digital Signal Processor (DSP), a Microcontroller Unit (MCU), or a Field-Programmable Gate Array (FPGA) in the transmission apparatus 10. In practical applications, the first communication unit 12 in the transmission apparatus 10 may be implemented by a communication module (including: basic communication suite, operating system, communication module, standardized interface and protocol, etc.) and a transceiver antenna.

Embodiments of the present disclosure further provide a transmission apparatus applied to a first device. FIG. 10 is a second schematic diagram of a composition structure of a transmission apparatus according to an embodiment of the present disclosure. As shown in FIG. 10, the transmission apparatus 20 includes a second processing unit 21 and a second communication unit 22.

The second processing unit 21 is configured to map a first service into a first frame; the first frame includes first indication information used to indicate a starting position of a first complete code block in a payload area of the first frame among a code block stream carried by the first frame; and to multiplex and/or map the first frame into a second frame.

The second communication unit 22 is configured to send the second frame.

In an optional embodiment of the present disclosure, the second processing unit 21 is configured to encode a third frame to obtain a code block stream, where the third frame is used to carry the first service; and to map the code block stream into the first frame.

In an optional embodiment of the present disclosure, the first frame includes a first overhead area.

In an optional embodiment of the present disclosure, the first overhead area is located in columns 1905 to 1920 of the first frame, and the payload area of the first frame is located in columns 17 to 1904 and columns 1921 to 3824 of the first frame.

In an optional embodiment of the present disclosure, the second processing unit 21 is configured to check the third frame in a second manner to obtain second check information; to encode the third frame and the second check information to obtain the code block stream, or to encode the third frame and obtain the code block stream based on the second check information and the encoded third frame.

In an optional embodiment of the present disclosure, the second processing unit 21 is configured to fill or place the first four bytes of the third frame into a start code block of the code block stream, and/or to fill or place the second check information into a last data code block or an end code block of the code block stream.

In an optional embodiment of the present disclosure, the second processing unit 21 is configured to fill or place the third frame into data code blocks of the code block stream, and/or to fill or place the second check information into a first idle code block after an end code block of the code block stream.

In an optional embodiment of the present disclosure, the code block stream is a 64B/66B encoded block stream.

In an optional embodiment of the present disclosure, the second manner is Cyclic Redundancy Check (CRC); and the second check information is CRC information.

In the embodiment of the present disclosure, in practical applications, the second processing unit 21 in the transmission apparatus 20 may be implemented by a CPU, DSP, MCU, or FPGA in the transmission apparatus 20. In practical applications, the second communication unit 22 in the transmission apparatus 20 may be implemented by a communication module (including: basic communication suite, operating system, communication module, standardized interface and protocol, etc.) and a transceiver antenna.

Embodiments of the present disclosure further provide a transmission apparatus applied to a second device. FIG. 11 is a third schematic diagram of a composition structure of a transmission apparatus according to an embodiment of the present disclosure. As shown in FIG. 11, the transmission apparatus 30 includes a third communication unit 31 and a third processing unit 32.

The third communication unit 31 is configured to receive a second frame sent by a first device.

The third processing unit 32 is configured to perform demultiplexing and/or demapping on the second frame to obtain a first frame; where the first frame includes at least a first overhead area; and to perform demapping on the first frame to obtain a first service.

In an optional embodiment of the present disclosure, the first overhead area is located in columns 1905 to 1920 of the first frame.

In an optional embodiment of the present disclosure, the first frame further includes a payload area located in columns 17 to 1904 and columns 1921 to 3824 of the first frame; the third processing unit 32 is further configured to obtain first check information of an i-th first frame from a second overhead area of an (i+2)-th first frame, where the first check information is obtained by the first device checking data carried in the payload area of the i-th first frame in a first manner, i is a positive integer.

In an optional embodiment of the present disclosure, the first manner is BIP check; and the first check information is BIP check information.

In the embodiment of the present disclosure, in practical applications, the third processing unit 32 in the transmission apparatus 30 may be implemented by a CPU, DSP, MCU, or FPGA in the transmission apparatus 30. In practical applications, the third communication unit 31 in the transmission apparatus 30 may be implemented by a communication module (including: basic communication suite, operating system, communication module, standardized interface and protocol, etc.) and a transceiver antenna.

Embodiments of the present disclosure further provide a transmission apparatus applied to a second device. FIG. 12 is a fourth schematic diagram of a composition structure of a transmission apparatus according to an embodiment of the present disclosure. As shown in FIG. 12, the transmission apparatus 40 includes a fourth communication unit 41 and a fourth processing unit 42.

The fourth communication unit 41 is configured to receive a second frame sent by a first device.

The fourth processing unit 42 is configured to perform demultiplexing and/or demapping on the second frame to obtain a first frame, where the first frame includes first indication information used to indicate a starting position of a first complete code block in a payload area of the first frame among a code block stream carried by the first frame; and to perform demapping on the first frame based on the first indication information to obtain a first service.

In an optional embodiment of the present disclosure, the fourth processing unit 42 is configured to obtain a code block stream based on the first indication information, to decode the code block stream to obtain a third frame, and to obtain the first service from the third frame.

In an optional embodiment of the present disclosure, the first frame includes a first overhead area.

In an optional embodiment of the present disclosure, the first overhead area is located in columns 1905 to 1920 of the first frame, and the payload area of the first frame is located in columns 17 to 1904 and columns 1921 to 3824 of the first frame.

In an optional embodiment of the present disclosure, the fourth processing unit 42 is configured to obtain the third frame from a start code block and data code blocks of the code block stream, and/or to obtain second check information from a last data code block or an end code block of the code block stream, where the second check information is check information obtained by the first device checking the third frame in a second manner.

In an optional embodiment of the present disclosure, the fourth processing unit 42 is configured to obtain the third frame from data code blocks of the code block stream, and/or to obtain second check information from a first idle code block after an end code block of the code block stream, where the second check information is check information obtained by the first device checking the third frame in a second manner.

In an optional embodiment of the present disclosure, the fourth processing unit 42 is further configured to check the decoded third frame in a second manner to obtain third check information; to compare the second check information with the third check information, and to replace one or more data code blocks or an end code block of the code block stream with error code blocks if the second check information is different from the third check information; where the second check information is check information obtained by the first device checking the third frame in the second manner.

In an optional embodiment of the present disclosure, the code block stream is a 64B/66B encoded block stream.

In an optional embodiment of the present disclosure, the second manner is CRC; both the second check information and the third check information are CRC information.

In the embodiment of the present disclosure, in practical applications, the fourth processing unit 42 in the transmission apparatus 40 may be implemented by a CPU, DSP, MCU, or FPGA in the transmission apparatus 40. In practical applications, the fourth communication unit 41 in the transmission apparatus 40 may be implemented by a communication module (including: basic communication suite, operating system, communication module, standardized interface and protocol, etc.) and a transceiver antenna.

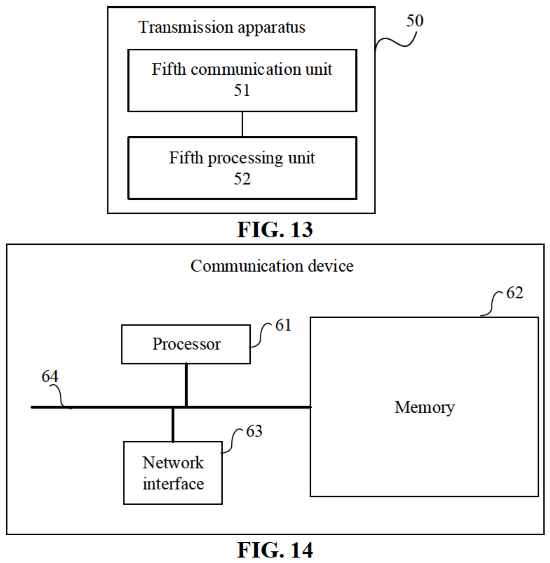

Embodiments of the present disclosure further provide a transmission apparatus applied to a second device. FIG. 13 is a fifth schematic diagram of a composition structure of a transmission apparatus according to an embodiment of the present disclosure. As shown in FIG. 13, the transmission apparatus 50 includes a fifth communication unit 51 and a fifth processing unit 52.

The fifth communication unit 51 is configured to receive a second frame sent by a first device;

The fifth processing unit 52 is configured to perform demultiplexing and/or demapping on the second frame to obtain a first frame, to decode a code block stream carried by the first frame to obtain a third frame, to check the third frame in a second manner to obtain third check information; and to compare the third check information with second check information, and to replace one or more data code blocks or an end code block of the code block stream with error code blocks if the third check information is different from the second check information; where the second check information is check information obtained by the first device checking the third frame in the second manner.

In the above solution, the first frame includes first indication information used to indicate a starting position of a first complete code block in a payload area of the first frame among a code block stream carried by the first frame.

In the above solution, the first frame includes a first overhead area.

In the above solution, the first overhead area is located in columns 1905 to 1920 of the first frame, and the payload area of the first frame is located in columns 17 to 1904 and columns 1921 to 3824 of the first frame.

In the above solution, the fifth processing unit 52 is configured to obtain the third frame from a start code block and data code blocks of the code block stream, and/or to obtain second check information from a last data code block or an end code block of the code block stream.

In the above solution, the fifth processing unit 52 is configured to obtain the third frame from data code blocks of the code block stream, and/or to obtain second check information from a first idle code block after an end code block of the code block stream.

In the above solution, the code block stream is a 64B/66B encoded block stream.

In the above solution, the second manner is a Cyclic Redundancy Check manner; both the second check information and the third check information are check information of Cyclic Redundancy Check.

In the embodiment of the present disclosure, in practical applications, the fifth processing unit 52 in the transmission apparatus 50 may be implemented by a CPU, DSP, MCU, or FPGA in the transmission apparatus 50. In practical applications, the fifth communication unit 51 in the transmission apparatus 50 may be implemented by a communication module (including: basic communication suite, operating system, communication module, standardized interface and protocol, etc.) and a transceiver antenna.

It should be noted that when the transmission apparatus provided in the above embodiment performs transmission, the division of the above program modules is merely used as an example for illustration. In practical applications, the above processing may be allocated to different program modules for completion according to requirements, that is, the internal structure of the apparatus may be divided into different program modules to complete all or part of the processing described above. In addition, the transmission apparatus provided in the above embodiment and the transmission method embodiment belong to the same concept, and the specific implementation process is detailed in the method embodiment, which will not be repeated here.

Embodiments of the present disclosure further provide a communication device, where the communication device may be the aforementioned first device or second device. FIG. 14 is a schematic diagram of a hardware composition structure of a communication device according to an embodiment of the present disclosure. As shown in FIG. 14, the communication device includes a memory 62, a processor 61, and a computer program stored on the memory 62 and executable on the processor 61. When executing the program, the processor 61 implements the steps of the transmission method applied to the first device in the embodiments of the present disclosure; or, when executing the program, the processor 61 implements the steps of the transmission method applied to the second device in the embodiments of the present disclosure.

Optionally, the communication device further includes at least one network interface 63. Each component in the communication device is coupled together through a bus system 64. It can be understood that the bus system 64 is used to implement connection and communication between these components. In addition to the data bus, the bus system 64 further includes a power bus, a control bus, and a status signal bus. However, for clarity of description, various buses are marked as the bus system 64 in FIG. 14.

It can be understood that the memory 62 may be a volatile memory or a non-volatile memory, or may include both volatile and non-volatile memories. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferroelectric Random Access Memory (FRAM), a Flash Memory, a magnetic surface memory, an optical disc, or a Compact Disc Read-Only Memory (CD-ROM); the magnetic surface memory may be a magnetic disk memory or a magnetic tape memory. The volatile memory may be a Random Access Memory (RAM) used as an external high-speed cache. By way of example and not limitation, many forms of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), SyncLink Dynamic Random Access Memory (SLDRAM), and Direct Rambus Random Access Memory (DRRAM). The memory 62 described in the embodiments of the present disclosure is intended to include, but is not limited to, these and any other suitable types of memory.

The methods disclosed in the above embodiments of the present disclosure may be applied to the processor 61 or implemented by the processor 61. The processor 61 may be an integrated circuit chip with signal processing capability. In the implementation process, the steps of the above methods may be completed by integrated logic circuits of hardware in the processor 61 or instructions in the form of software. The aforementioned processor 61 may be a general-purpose processor, a DSP, or other programmable logic devices, discrete gate or transistor logic devices, or discrete hardware components. The processor 61 may implement or execute the methods, steps, and logical block diagrams disclosed in the embodiments of the present disclosure. The general-purpose processor may be a microprocessor or any routine processor. The steps of the method disclosed in combination with the embodiments of the present disclosure may be directly embodied as executed by a hardware decoding processor, or executed by a combination of hardware and software modules in the decoding processor. The software module may be located in a storage medium, which is located in the memory 62, and the processor 61 reads information in the memory 62 and completes the steps of the aforementioned method in combination with its hardware.

In an exemplary embodiment, the communication device may be implemented by one or more Application Specific Integrated Circuits (ASICs), DSPs, Programmable Logic Devices (PLDs), Complex Programmable Logic Devices (CPLDs), FPGAs, general-purpose processors, controllers, MCUs, microprocessors, or other electronic components to execute the aforementioned methods.

In an exemplary embodiment, the embodiments of the present disclosure further provide a computer-readable storage medium, such as the memory 62 including a computer program, where the computer program may be executed by the processor 61 of the communication device to complete the steps of the aforementioned method. The computer-readable storage medium may be a FRAM, ROM, PROM, EPROM, EEPROM, Flash Memory, magnetic surface memory, optical disc, CD-ROM, or other memory; or may be various devices including one or any combination of the above memories.

The embodiments of the present disclosure further provide a computer-readable storage medium having a computer program stored thereon, where the program, when executed by a processor, implements the steps of the transmission method applied to the first device in the embodiments of the present disclosure; or, the program, when executed by a processor, implements the steps of the transmission method applied to the second device in the embodiments of the present disclosure.

The methods disclosed in several method embodiments provided by the present disclosure may be arbitrarily combined without conflict to obtain new method embodiments.

The features disclosed in several product embodiments provided by the present disclosure may be arbitrarily combined without conflict to obtain new product embodiments.

The features disclosed in several method or device embodiments provided by the present disclosure may be arbitrarily combined without conflict to obtain new method embodiments or device embodiments.

In the several embodiments provided by the present disclosure, it should be understood that the disclosed apparatus and method may be implemented in other ways. The apparatus embodiments described above are merely schematic. For example, the division of the units is only a logical function division, and there may be another division manner in actual implementation, such as: multiple units or components may be combined or integrated into another system, or some features may be ignored or not executed. In addition, the displayed or discussed mutual coupling, direct coupling, or communication connection may be implemented through some interfaces, and the indirect coupling or communication connection of the devices or units may be electrical, mechanical, or in other forms.

The units described as separate components may or may not be physically separated, and the components displayed as units may or may not be physical units, that is, they may be located in one place, or may be distributed on multiple network units; part or all of the units may be selected according to actual needs to achieve the purpose of the solution of this embodiment.

In addition, all functional units in each embodiment of the present disclosure may be integrated into one processing unit, or each unit may exist alone as a separate unit, or two or more units may be integrated into one unit; the above integrated units may be implemented in the form of hardware, or in the form of hardware plus software functional units.

Those of ordinary skill in the art can understand that all or part of the steps of implementing the above method embodiments may be completed by hardware related to program instructions. The aforementioned program may be stored in a computer-readable storage medium. When the program is executed, it executes the steps including the above method embodiments; and the aforementioned storage medium includes: removable storage devices, Read-Only Memory (ROM), Random Access Memory (RAM), magnetic disks, optical discs, and other media that can store program codes.

Alternatively, if the above integrated units in the present disclosure are implemented in the form of software function modules and sold or used as independent products, they may also be stored in a computer-readable storage medium. Based on such understanding, the technical solution of the embodiments of the present disclosure essentially, or the part that contributes to the prior art, may be embodied in the form of a software product. The computer software product is stored in a storage medium and includes several instructions to enable a computer device (which may be a personal computer, a server, or a network device, etc.) to execute all or part of the methods described in the various embodiments of the present disclosure. The aforementioned storage medium includes: removable storage devices, ROM, RAM, magnetic disks, optical discs, and other media that can store program codes.

The above is only a specific implementation of the present disclosure, but the protection scope of the present disclosure is not limited thereto. Any person skilled in the art can easily think of changes or substitutions within the technical scope disclosed by the present disclosure, which should be covered within the protection scope of the present disclosure. Therefore, the protection scope of the present disclosure shall be subject to the protection scope of the claims.

## Claims

1. A transmission method, wherein the method is applied to a first device, and the method comprises:
mapping a first service into a first frame, wherein the first frame comprises at least a first overhead area; and
multiplexing and/or mapping the first frame into a second frame, and sending the second frame.

2. The method according to claim 1, wherein the first overhead area is located in columns 1905 to 1920 of the first frame.

3. The method according to claim 1, wherein the first frame further comprises a payload area, and the payload area is located in columns 17 to 1904 and columns 1921 to 3824 of the first frame; and the method further comprises:
checking data carried by the payload area of an i-th first frame in a first manner to obtain first check information of the i-th first frame; and
filling or placing the first check information of the i-th first frame into a second overhead area of an (i+2)-th first frame, where i is a positive integer.

4. The method according to claim 3, wherein the first manner is bit-interleaved parity check;
the first check information is check information of the bit-interleaved parity check.

5. A transmission method, wherein the method is applied to a first device; and the method comprises:
mapping a first service into a first frame, wherein the first frame comprises first indication information, and the first indication information is used to indicate a starting position of a first complete code block in a payload area of the first frame among a code block stream carried by the first frame; and
multiplexing and/or mapping the first frame into a second frame, and sending the second frame.

6. The method according to claim 5, wherein the mapping a first service into a first frame comprises:
encoding a third frame to obtain a code block stream, wherein the third frame is used to carry the first service; and
mapping the code block stream into the first frame.

7. The method according to claim 5, wherein the first frame comprises a first overhead area.

8. The method according to claim 7, wherein the first overhead area is located in columns 1905 to 1920 of the first frame, and
the payload area of the first frame is located in columns 17 to 1904 and columns 1921 to 3824 of the first frame.

9. The method according to claim 6, wherein the encoding a third frame to obtain a code block stream comprises:
checking the third frame in a second manner to obtain second check information; and
encoding the third frame and the second check information to obtain the code block stream; or encoding the third frame, and obtaining the code block stream based on the second check information and the encoded third frame.

10. The method according to claim 9, wherein the encoding the third frame and the second check information to obtain the code block stream comprises:
filling or placing the first four bytes of the third frame into a start code block of the code block stream, and/or
filling or placing the second check information into a last data code block or an end code block of the code block stream.

11. The method according to claim 9, wherein the encoding the third frame and the second check information to obtain the code block stream comprises:
filling or placing the third frame into data code blocks of the code block stream, and/or
filling or placing the second check information into a first idle code block after an end code block of the code block stream.

12. The method according to any one of claims 5 to 11, wherein the code block stream is a 64B/66B encoded block stream.

13. The method according to any one of claims 9 to 11, wherein the second manner is cyclic redundancy check;
and the second check information is check information of the cyclic redundancy check.

14. A transmission method, wherein the method is applied to a second device; the method comprises:
receiving a second frame sent by a first device, and performing demultiplexing and/or demapping on the second frame to obtain a first frame, wherein the first frame comprises at least a first overhead area; and
performing demapping on the first frame to obtain a first service.

15. The method according to claim 14, wherein the first overhead area is located in columns 1905 to 1920 of the first frame.

16. The method according to claim 14, wherein the first frame further comprises a payload area, and the payload area is located in columns 17 to 1904 and columns 1921 to 3824 of the first frame; and the method further comprises:
obtaining first check information of an i-th first frame from a second overhead area of an (i+2)-th first frame, wherein the first check information is obtained by the first device checking data carried by the payload area of the i-th first frame in a first manner; and i is a positive integer.

17. The method according to claim 16, wherein the first manner is bit-interleaved parity check; and
the first check information is check information of the bit-interleaved parity check.

18. A transmission method, wherein the method is applied to a second device; the method comprises:
receiving a second frame sent by a first device, and performing demultiplexing and/or demapping on the second frame to obtain a first frame, wherein the first frame comprises first indication information, and the first indication information is used to indicate a starting position of a first complete code block in a payload area of the first frame among a code block stream carried by the first frame; and
performing demapping on the first frame based on the first indication information to obtain a first service.

19. The method according to claim 18, wherein the performing demapping on the first frame based on the first indication information to obtain a first service comprises:
obtaining a code block stream based on the first indication information,
decoding the code block stream to obtain a third frame, and
obtaining the first service from the third frame.

20. The method according to claim 18, wherein the first frame comprises a first overhead area.

21. The method according to claim 20, wherein the first overhead area is located in columns 1905 to 1920 of the first frame, and the payload area of the first frame is located in columns 17 to 1904 and columns 1921 to 3824 of the first frame.

22. The method according to claim 19, wherein the decoding the code block stream to obtain a third frame comprises:
obtaining the third frame from a start code block and data code blocks of the code block stream, and/or
obtaining second check information from a last data code block or an end code block of the code block stream, wherein the second check information is check information obtained by the first device checking the third frame in a second manner.

23. The method according to claim 19, wherein the decoding the code block stream to obtain a third frame comprises:
obtaining the third frame from data code blocks of the code block stream, and/or
obtaining second check information from a first idle code block after an end code block of the code block stream, wherein the second check information is check information obtained by the first device checking the third frame in a second manner.

24. The method according to any one of claims 18 to 23, wherein the code block stream is a 64B/66B encoded block stream.

25. The method according to claim 22 or 23, wherein the second manner is cyclic redundancy check; and
the second check information is check information of the cyclic redundancy check.

26. A transmission method, wherein the method is applied to a second device; the method comprises:
receiving a second frame sent by a first device, and performing demultiplexing and/or demapping on the second frame to obtain a first frame;
decoding a code block stream carried by the first frame to obtain a third frame, and checking the third frame in a second manner to obtain third check information; and
comparing the third check information with second check information, and replacing one or more data code blocks or an end code block of the code block stream with error code blocks if the third check information is different from the second check information, wherein the second check information is check information obtained by the first device checking the third frame in the second manner.

27. The method according to claim 26, wherein the first frame comprises first indication information, and the first indication information is used to indicate a starting position of a first complete code block in a payload area of the first frame among the code block stream carried by the first frame.

28. The method according to claim 26, wherein the first frame comprises a first overhead area.

29. The method according to claim 28, wherein the first overhead area is located in columns 1905 to 1920 of the first frame, and the payload area of the first frame is located in columns 17 to 1904 and columns 1921 to 3824 of the first frame.

30. The method according to claim 26, wherein the decoding a code block stream carried by the first frame to obtain a third frame comprises:
obtaining the third frame from a start code block and data code blocks of the code block stream, and/or
obtaining second check information from a last data code block or an end code block of the code block stream.

31. The method according to claim 26, wherein the decoding a code block stream carried by the first frame to obtain a third frame comprises:
obtaining the third frame from data code blocks of the code block stream, and/or
obtaining second check information from a first idle code block after an end code block of the code block stream.

32. The method according to any one of claims 26 to 31, wherein the code block stream is a 64B/66B encoded block stream.

33. The method according to any one of claims 26 to 31, wherein the second manner is cyclic redundancy check; and
both the second check information and the third check information are check information of the cyclic redundancy check.

34. A transmission apparatus, wherein the apparatus is applied to a first device; the apparatus comprises a first processing unit and a first communication unit; wherein
the first processing unit is configured to map a first service into a first frame, wherein the first frame comprises at least a first overhead area; and to multiplex and/or map the first frame into a second frame; and
the first communication unit is configured to send the second frame.

35. A transmission apparatus, wherein the apparatus is applied to a first device; the apparatus comprises a second processing unit and a second communication unit; wherein
the second processing unit is configured to map a first service into a first frame, wherein the first frame comprises first indication information, and the first indication information is used to indicate a starting position of a first complete code block in a payload area of the first frame among a code block stream carried by the first frame; and to multiplex and/or map the first frame into a second frame; and
the second communication unit is configured to send the second frame.

36. A transmission apparatus, wherein the apparatus is applied to a second device; the apparatus comprises a third communication unit and a third processing unit; wherein
the third communication unit is configured to receive a second frame sent by a first device; and
the third processing unit is configured to perform demultiplexing and/or demapping on the second frame to obtain a first frame, wherein the first frame comprises at least a first overhead area; and to perform demapping on the first frame to obtain a first service.

37. A transmission apparatus, wherein the apparatus is applied to a second device; the apparatus comprises a fourth communication unit and a fourth processing unit; wherein
the fourth communication unit is configured to receive a second frame sent by a first device; and
the fourth processing unit is configured to perform demultiplexing and/or demapping on the second frame to obtain a first frame, wherein the first frame comprises first indication information, and the first indication information is used to indicate a starting position of a first complete code block in a payload area of the first frame among a code block stream carried by the first frame; and to perform demapping on the first frame based on the first indication information to obtain a first service.

38. A transmission apparatus, wherein the apparatus is applied to a second device; and the apparatus comprises a fifth communication unit and a fifth processing unit; wherein
the fifth communication unit is configured to receive a second frame sent by a first device; and
the fifth processing unit is configured to perform demultiplexing and/or demapping on the second frame to obtain a first frame, decode a code block stream carried by the first frame to obtain a third frame, check the third frame in a second manner to obtain third check information; and compare the third check information with second check information, and replace one or more data code blocks or an end code block of the code block stream with error code blocks if the third check information is different from the second check information, wherein the second check information is check information obtained by the first device checking the third frame in the second manner.

39. A computer-readable storage medium having computer instructions stored therein, wherein the instructions, when executed by a processor, implement the steps of the method according to any one of claims 1 to 4; or
the instructions, when executed by a processor, implement the steps of the method according to any one of claims 5 to 13; or
the instructions, when executed by a processor, implement the steps of the method according to any one of claims 14 to 17; or
the instructions, when executed by a processor, implement the steps of the method according to any one of claims 18 to 25 or
the instructions, when executed by a processor, implement the steps of the method according to any one of claims 26 to 33.

40. A communication device, comprising a memory, a processor, and a computer program stored in the memory and executable by the processor, wherein:
the processor is configured to, when executing the program, implement the steps of the method according to any one of claims 1 to 4; or
the processor is configured to, when executing the program, implement the steps of the method according to any one of claims 5 to 13; or
the processor is configured to, when executing the program, implement the steps of the method according to any one of claims 14 to 17; or
the processor is configured to, when executing the program, implement the steps of the method according to any one of claims 18 to 25; or
the processor is configured to, when executing the program, implement the steps of the method according to any one of claims 26 to 33.
